# EUROPEAN PATENT APPLICATION

(11) **EP 2 436 729 A1**
(43) Date of publication of application: **04.04.2012**
(21) Application number: 11188549.7
(22) Date of filing: 26.03.2008
(51) Int. Cl.: C08L 67/02, C08L 77/00, D01F 8/04

(54) **Wash resistant synthetic polymer compositions containing active compounds**

(30) Priority: 29.03.2007 US 920677 P
(62) Divisional of application: 08732811.8
(71) Applicant: INVISTA Technologies S.à.r.l., 9000 St. Gallen (CH)
(72) Inventor: Sun, Yanhui, Wilmington, DE Delaware DE 19803 (US)
(74) Representative: Carpmaels & Ransford

(57) **Abstract**

A synthetic polymer composition comprising a blend of a synthetic thermoplastic polymer and a polymer containing a polyether chain as a constituent, wherein the article manufactured from the blend contains an active compound is disclosed. Yarns may be formed from the synthetic polymer blend and then knitted or woven into articles, such as net or fabric. The articles may be treated with active compounds such as a perfume, fabric softener, sunscreen agent, antibacterial agent, pesticide, insecticide and such other compounds that provide functionality on the article. The treated articles of the invention retain more than an effective amount of active compounds even after numerous washings.

## Description

### Background of the Invention

### 1. Field of the Invention

This patent disclosure relates to wash resistant synthetic polymer compositions, including fibers, yarn, fabrics and garments containing such fibers. These compositions have a useful function as carriers for active compounds such as insecticides, insect repellents, flagrances, drugs and other active additives. In particular, these polymer compositions have an affinity for additives not easily removed from the substrate by traditional means of cleaning or laundering. In particular, it relates to long lasting insecticidal mosquito nets.

### 2. Prior Art

Carriers, such as PVC and thermoplastic elastomers, are used in a polymer matrix for the slow release of active compounds such as pesticides, insecticides and other compounds to control microbes, fungi, mites, etc.

European Patent No. 0 542 081 A1 to Brandt et al. discloses the use of copolyesters as carriers for active compounds, including synthetic pyrethroids as insecticides. Brandt et al. is directed to using this resin directly for injection molding into such articles as dog collars. Such active compounds are expected by the skilled practioner to be thermally stable at the injection temperature of the copolyester. These injection molded articles do not need to be wash resistant.

Japanese Patent Publication No. 08-109516 to Watanabe et al. discloses a blend of an active compound, such as an insecticide, with a polyether-ester added to the polyester polymer just prior to spinning. The preferred polyether-ester is prepared from terephthalic acid and polytetramethylene glycol. The insecticide is expected to be thermally stable. Watanabe et al. provide no information on the wash fastness of articles made from these fibers.

U.S. Patent No. 6,120,790 to Kuratsuji et al. uses a polyether/polyester block copolymer as a carrier for antimicrobial/fungistatic agents. These can be blended with other polymers. It is mainly directed for inorganic agents, since organic additives are generally unstable at the processing temperatures. Kuratsuji et al. provide no information with respect to wash fastness of articles prepared from these compositions.

Japanese Publication No. 11-140775 to Kenji et al. is directed at an antimicrobial and mite proof polyester fiber. The agent (a quaternary ammonium salt) is compounded (or added at the last stage of the polyether/polyester polymerization). This is used as an emulsion as a post-draw finish. Kenji et al provide no information on the wash fastness of articles made from these fibers.

U.S. Patent No. 6,375,966 to Maleeny et al. discloses a polyurethane/urea matrix preparation process which can be tailored to deliver fragrances and certain insect repellent formulations. These injection molded articles do not need to be wash resistant.

Malaria is a disease which infects about 300 to 500 million people each year and kills approximately 1.5 to 2.7 million people, according to the World Health Organization statistics. Since malaria and related mosquito bite transmitted diseases, such as the West Nile fever, encephalitis, yellow fever, and Dengue fever, have serious human health consequences, all means to attack and eliminate mosquito breeding is warranted. Known means to control mosquitoes, in addition to airborne (aerosol) application of insecticides, include the insecticide treatment of articles such as: nets, curtains, and window screening used to isolate portions of indoor living spaces and bedroom areas, as well as protective clothing. The washing of bedding nets or protective clothing, previously treated with insecticides, presents the additional problem of durability of the insecticide treatment. In general insecticide treated mosquito nets require, after washing, to be re-impregnated with insecticide. This is rarely done in the field. Hence there have been many attempts to improve the durability of insecticide mosquito nets after washing.

U.S. Patent No. 5,303, 918 to Samson et al. treats the net with a PVA solution, prior to padding on the insecticide (permethrin). In the case of the control there was no permethrin after 20 washings (140° F), whereas with a PVA treatment less than 20% remained.

U.S. Patent No. 5,631,072 to Samson et al. discloses the use of a solution of permethrin and a polymer binder such as an acrylic copolymer, or adding a cross-linking agent to a PVA binder. Both approaches improved the durability of the insecticide compared to PVA alone.

U.S. Patent No. 5,733,560 to Davister et al. discloses the use of an ethoxylated glycerol that reacts with the insecticide or other volatile compound. This reduces the vapor pressure of the insecticide prolonging its efficiency. There is no information on the wash fastness of articles made from these fibers.

International Patent No. WO 01/37662 to Skovmand discloses the use of a wash resistant treatment and a soil resistant treatment (to minimize the need for intensive washing). These treatments, added after impregnation of the insecticide, are based on polysiloxane and fluorocarbons. Durability lasted for 12 washes using alphacypermethrin as the insecticide.

International Patent No. WO 01/58261 to Mount et al. discloses a binder system of cyclodextrin and PVA. Using permethrin as the insecticide they found that durability was maintained for 10 washes.

International Patent No. WO 03/034823 to Baeker discloses a composition of the insecticide, a copolymeric hydrophobic binder (styrene 2-ethylhexylacrylate copolymer) and a dispersing agent (sodium silicate). It claims that on washing the dispersing agent allows more insecticide to come to the surface of the net. By controlling the rate of release of the insecticide they claim that the net can remain effective even after 50 washes (WHO Standard Methods).

Japan Patent Publication No. 08-296171 to Takahi et al. discloses the use of an insecticide and binder system on polyurethane fabrics. These were durable to 5 washes.

None of the above disclosures satisfy the need for compositions containing active compounds that can be formed into articles that are wash resistant. Herein, our patent disclosure addresses the need for synthetic fiber compositions from which articles containing insecticides and other active compounds can be manufactured. In addition the teachings herein, provided are fibers and fabrics containing insecticides and repellents, with an inherent high degree of wash fastness and insect repellency and mortality that meet the requirements of the World Health Organization for long lasting mosquito nets.

### Summary of the Invention

The teachings herein are directed to a synthetic polymer composition comprising a blend of a synthetic thermoplastic polymer and a polymer containing a polyether chain as a constituent (carrier), wherein the article manufactured from the blend contains an active compound. The thermoplastic polymer is chosen from polyesters, polycarbonates, poly(alpha)olefins or polyamides. The carrier is chosen from polyoxyalkylene, or a polyether block copolymer with an amide, ester or urethane. The articles generally comprise woven or knitted structures from fibers, which may be continuous yarns or discontinuous staple yarns. The article is impregnated with an active compound.

The synthetic polymer composition to which the teachings herein are directed comprises a blend of a thermoplastic polymer and a polymer containing a polyether chain as a constituent, wherein articles prepared from said composition comprise an active compound and wherein said article is wash resistant.

More specifically the synthetic polymer composition is a thermoplastic compound chosen from any of polyesters, polycarbonates, poly(alpha)olefins or polyamides.

The synthetic polymer composition may contain a polyether chain as a constituent chosen from polyoxyalkylene, or a polyether block copolymer with an amide, ester or urethane

The synthetic polymer composition may contain a polyether chain as a constituent chosen from polyether/ester block copolymers.

The synthetic polymer composition further comprises an active compound: a perfume, fabric softener, sunscreen agent, antibacterial agent, pesticide, insecticide or such other compounds that provide functionality.

The synthetic polymer composition may further comprise an insecticide selected from the group consisting of synthetic pyrethroids, carbamate compounds, organophosphorus compounds or a mixture of these.

The synthetic polymer composition may further comprise a polyether chain as a constituent in an amount of 0.5 to 15 weight percent of the total composition.

The synthetic polymer composition may further comprise an active compound in an amount of 0.05 to 1 weight percent of the total composition.

The teachings herein are further directed to a multifilament yarn prepared by melt spinning a synthetic polymer composition comprising a blend of a thermoplastic polymer and a polymer containing a polyether chain as a constituent.

The multifilament yarn, to which the teachings herein are further directed, may comprise a thermoplastic compound chosen from polyesters, polycarbonates, poly(alpha)olefins or polyamides.

The multifilament yarn to which the teachings herein are further directed may comprise a polyether chain as a constituent, a polyoxyalkylene, or a polyether block copolymer with an amide, ester or urethane

The multifilament yarn to which the teachings herein are further directed may comprise a polymer containing a polyether chain as a constituent or a polyether/ester block copolymer.

The teachings herein are further directed to woven or knitted articles prepared from the multifilament yarn herein disclosed.

The article to which the teachings herein are directed may comprise one impregnated with an active compound.

The article to which the teachings herein are further directed may comprise one impregnated with an active compound chosen from perfume, fabric softener, sunscreen agent, antibacterial agent, pesticide, insecticide or such other compounds that provide functionality.

The article to which the teachings herein are further directed may comprise one impregnated with an insecticide chosen from among synthetic pyrethroids, carbamate compounds, organophosphorus compounds or a mixture of these.

The article to which the teachings herein are further directed may comprise one impregnated with an insecticide wherein the article is chosen from netting, nets, outerwear, bedding, protective clothing, underwear, clothing and tents.

The article to which the teachings herein are further directed may comprise one impregnated with an insecticide wherein the insecticide comprises more than 0.1 weight % after five wash cycles.

These teachings herein further pertain to a method for preparing articles from a synthetic polymer composition comprising a blend of a synthetic thermoplastic polymer and a polymer containing a polyether chain as a constituent in which an active compound is impregnated.

These teachings herein further pertain to a method for making an article suitable as a carrier for active compounds, comprising:
blending a thermoplastic polymer with a polymer containing a polyether chain as a constituent; forming a plurality of fibers from the blended thermoplastic polymer with a polymer containing a polyether chain as a constituent; forming an article from the plurality of fibers; and treating the article with a solution of the active compound, wherein the treated article contains more than 0.1 wt. % of active compound after five cycles of washing.

These teachings herein further pertain to a method for making an article wherein said thermoplastic polymer is a polyester, polycarbonate, poly(alpha)olefin or polyamide.

These teachings herein further pertain to a method for making an article wherein said thermoplastic polymer containing a polyether chain as a constituent is a polyoxyalkylene, or a polyether block copolymer with an amide, ester or urethane.

These teachings herein further pertain to a method for making an article wherein said thermoplastic polymer containing a polyether chain as a constituent is a polyether/ester block copolymer.

These teachings herein further pertain to a method for making an article wherein the step of treating the article with a solution of an active compound, comprises active compounds chosen from perfume, fabric softener, sunscreen agent, antibacterial agent, pesticide, insecticide or such other compounds that provide functionality.

These teachings herein further pertain to a method for making an article wherein the step of treating the article with a solution of an active compound, comprises an insecticide chosen from synthetic pyrethroids, carbamate compounds, organophosphorus compounds or a mixture of these.

These teachings herein further pertain to a method for making an article wherein the step of blending a thermoplastic polymer with a polymer containing a polyether chain as a constituent comprises an amount of 0.5 to 15 weight percent of the total composition.

These teachings herein further pertain to a method for making an article wherein the step of treating the article with a solution of an active compound, comprises an amount of 0.05 to 3 weight percent of the total composition.

### Detailed Description of the Invention

The teachings herein are directed to a synthetic polymer composition comprising a blend of a synthetic thermoplastic polymer and a polymer containing a polyether chain as a constituent, wherein the article manufactured from the blend contains an active compound. The article is "wash resistant" which means that the active compound retains its functionality after washing at least about five times in an agitated 0.2 weight % detergent (1993 American Association of Textile Chemists and Colorists Standard Reference Detergent) solution at a pH of 10 at a liquor ratio of 175:1 for 10 minutes, rinsed and dried.

### Synthetic Polymer Composition

Polyesters, copolyesters, polycarbonates, copolycarbonates, polyamides, copolyamides, poly(alpha)olefins or mixtures of these are the most common synthetic thermoplastic polymers.

Generally polyesters or copolyesters can be prepared by one of two processes, namely: (1) the ester process and (2) the acid process. The ester process is where at least one dicarboxylic ester (such as dimethyl terephthalate) is reacted with at least one diol (such as ethylene glycol) in an ester interchange reaction. Because the reaction is reversible, it is generally necessary to remove the alcohol (methanol when dimethyl terephthalate is employed) to completely convert the raw materials into monomer. Monomers so prepared contain mixtures of short chain oligomers and in some cases small amounts of the starting materials. Certain catalysts are well known for use in the ester interchange reaction. In the past, catalytic activity was then sequestered by introducing a phosphorus compound, for example polyphosphoric acid, at the end of the ester interchange reaction. Primarily the ester interchange catalyst was sequestered to prevent yellowness from occurring in the polymer.

Then the monomer undergoes polycondensation and the catalyst employed in this reaction is generally an antimony, germanium, or titanium compound, or a mixture of these.

In the second method for making polyester or copolyester, at least one dicarboxylic acid (such as terephthalic acid) is reacted with at least one diol (such as ethylene glycol) by a direct esterification reaction producing monomer and water. Monomer so prepared contains mixtures of short chain oligomers and in some cases small amounts of the starting materials. This reaction is also reversible like the ester process and thus to drive the reaction to completion one must remove the water. In most cases the direct esterification step does not require a catalyst. The monomer then undergoes polycondensation to form polyester just as in the ester process, and the catalyst and conditions employed are generally the same as those for the ester process.

Suitable polyesters are produced from the reaction of a diacid or diester component comprising at least 65 mol- % terephthalic acid or C₁ - C₄ dialkylterephthalate, preferably at least 70 mol- %, more preferably at least 75 mol- %, even more preferably, at least 95 mol- %, and a diol component comprising at least 65% mol-% ethylene glycol, or C₂ - C₂₀ diglycols preferably at least 70 mol- %, more preferably at least 75 mol- %, even more preferably at least 95 mol- %. It is also preferable that the diacid component is terephthalic acid and the diol component is ethylene glycol, thereby forming polyethylene terephthalate (PET). The mole percent for all the diacid component totals 100 mol- %, and the mole percentage for all the diol component totals 100 mol- %.

Where the polyester components are modified by one or more diol components other than ethylene glycol, suitable diol components of the described polyester may be selected from 1, 4-cyclohexandedimethanol; 1,2-propanediol; 1, 4-butanediol; 2,2-dimethyl-1, 3-propanediol; 2-methyl-1, 3-propanediol (2MPDO); 1,6-hexanediol; 1,2-cyclohexanediol; 1,4-cyclohexanediol; 1,2-cyclohexanedimethanol; 1,3-cyclohexanedimethanol, and diols containing one or more oxygen atoms in the chain, e.g., diethylene glycol, triethylene glycol, dipropylene glycol, tripropylene glycol or mixtures of these, and the like. In general, these diols contain 2 to 18, preferably 2 to 8 carbon atoms. Cycloaliphatic diols can be employed in their cis or trans configuration or as mixture of both forms. Preferred modifying diol components are 1,4-cyclohexanedimethanol or diethylene glycol, or a mixture of these.

Where the polyester components are modified by one or more acid components other than terephthalic acid, the suitable acid components (aliphatic, alicyclic, or aromatic dicarboxylic acids) of the linear polyester may be selected, for example, from isophthalic acid, 1,4-cyclohexanedicarboxylic acid, 1,3-cyclohexanedicarboxylic acid, succinic acid, glutaric acid, adipic acid, sebacic acid, 1,12-dodecanedioic acid, 2,6-naphthalenedicarboxylic acid, bibenzoic acid, or mixtures of these and the like. In the polymer preparation, it is often preferable to use a functional acid derivative thereof such as the dimethyl, diethyl, or dipropyl ester of the dicarboxylic acid. The anhydrides or acid halides of these acids also may be employed where practical.

In addition to polyester made from terephthalic acid (or dimethyl terephthalate) and ethylene glycol, or a modified polyester as stated above, the present invention also includes the use of 100% of an aromatic diacid such as 2, 6-naphthalene dicarboxylic acid or bibenzoic acid, or their diesters, and a modified polyester made by reacting at least 85 mol- % of the dicarboxylate from these aromatic diacids/diesters with any of the above comonomers.

As used herein, polycarbonate includes copolymers and polyester carbonates. The most common polycarbonate is based on bisphenol A. Polycarbonates are prepared commercially by two processes: Schotten-Baumann reaction of phosgene and an aromatic diol in an amine catalyzed interfacial condensation reaction; or via a base catalyzed transesterification of a bisphenol with a monomeric carbonate.

Polyamides, such as nylon 6,6, or copolyamides are generally prepared by melt phase polymerization from at least one diacid-diamine salt which may be prepared either in situ or in a separate step. In either method, the diacid and diamine are used as starting materials. When the diacid-diamine salt is used, the mixture is heated to melting and stirred until equilibration. The polymerization or copolymerization can be carried out either at atmospheric pressure or at elevated pressures or under vacuum. Polyamides formed from amino acids such as nylon 6, are generally produced by the ring opening of the corresponding lactam. The most common method is hydrolytic polymerization, in which lactams are heated in the presence of water above the melting point of the polyamide. The hydrolytic ring opening can be catalyzed by an acid or a base. The resulting amino acid then condenses in a stepwise manner to form the growing polymer chain. In anionic polymerization the reaction is initiated by a strong base, e.g. a metal hydride, alkali metal oxide, organometallic compounds, or hydroxides to form a lactamate. The lactamate then initiates a two-step reaction which adds a molecule of the lactam to the polymer chain. Lactams can also be polymerized under anhydrous conditions by a cationic mechanism initiated by strong protic acids, their salts, Lewis acids, as well as amines and ammonia. Polyamides of the present invention preferably contain at least about 85 mole-% aliphatic moieties between each amide linkage in the polymer and are generally referred to as nylon. Nylon 6, nylon 66, nylon 7, nylon 6,10; nylon 6,12; nylon 12 and copolyamides, as well as, thermoplastic nylons of ordinary commerce are useful in carrying out the teachings herein.

Other thermoplastic polymers are poly(alpha)olefins, including the normally solid, homo-, co- and terpolymers of aliphatic mono-1-olefins (alpha olefins) as they are generally recognized in the art. Usually, the monomers employed in making such poly(alpha)olefins contain 2 to 10 carbon atoms per molecule, although higher molecular weight monomers sometimes are used as comonomers. Blends of the polymers and copolymers prepared mechanically or in situ may also be used. Examples of monomers that can be employed in the invention include ethylene, propylene, butene-1, pentene-1, 4-methylpentene-1, hexene-1, and octene-1, alone, or in admixture, or in sequential polymerization systems. Examples of preferred thermoplastic poly(alpha)olefin polymers include polyethylene, polypropylene, propylene/ethylene copolymers, polybutylene and blends thereof. Polyethylene and polypropylene are particularly preferred for use in the invention.

In addition to the above thermoplastic polymers used for the present invention, additives can also be added. Such additives may be anti-static agents, coloring agents (dyes and pigments), coupling agents, flame retardants, heat stabilizers, light stabilizers, lubricants, plasticizers and mixtures of a plurality of these.

### Carrier

The carrier in the present invention is a "polymer containing a polyether chain as a constituent unit". This can be a block copolymer in which a polyoxyalkylene chain is connected to another macromolecular chain, or a polymer in which polyoxyalkylene chains are linked via linking portions. Examples of polyoxyalkylenes here include polyoxyethylene, poly(1,2- and 1,3-oxypropylene), polyoxytetramethylene, polyoxyhexamethylene, block and random copolymers of ethylene oxide and propylene oxide, and block and random copolymers of ethylene oxide and tetrahydrofuran, etc. The alkylene portion particularly preferably has 2-4 carbons, and polyoxyethylene and polyoxytetramethylene are most preferred.

The number average molecular weight of the polyoxyalkylene is preferably in the range 300-6000, and more preferably 500-4000.

Within the present invention polyether/polyester block copolymers, polyether/polyamide block copolymers and polyether urethanes are preferably used as the "polymer containing a polyether chain as a constituent unit".

Within the present invention a polyether/polyester block copolymer is a polymer in which a poly(alkylene oxide) chain (a) is linked with a polyester chain (c) which is a polymer of an oxycarboxylic acid of 6 carbons or a dihydroxy compound of 2 carbons and an aromatic dicarboxylic acid. Two or more of the aforementioned components (c) can also be used together. These polymers are discussed in detail, for example, in the specification of U.S. Pat. No. 4,739,012 (DuPont Co.). Commercial examples include (DuPont), Pelprene® P series (Toyobo), and Rekuse® (Teijin). The percentages by weight of aforementioned component (a) and component (c) in the block copolymer used in the present invention can be decided according to the purpose and end use.

Within the present invention a "polyether/polyamide block copolymer" is a copolymer in which a poly(alkylene oxide) chain (a) is linked with a polyamide chain (b) which is a polymer of an aminocarboxylic acid or a lactam of 6 carbons or a salt of a dicarboxylic acid and a diamine of 6 carbons. Copolymers in which (a) and (b) are linked via a dicarboxylic acid of 4-20 carbons are termed generally polyether ester amides. These polymers can be made, for example, by the method of Japanese Examined Patent 56-45419. Commercial examples include Pebax® (Elf-Atochem), Ely® (Ems) and Vestamide® (Huls). The types and proportions of the polyamide component and polyether component in block copolymers used in the present invention can be selected according to the purpose and end use.

As aminocarboxylic acids or lactams of 6 carbons or salts of a dicarboxylic acid and a diamine of 6 carbons here, 11-aminoundecanoic acid, 12-aminododecanoic acid, caprolactam, laurolactam, enathalactam, hexamethylene diamine adipic acid salt and hexamethylene diamine sebacic acid salt are preferably used. Two or more of the aforementioned components (a) can also be used concomitantly.

Within the present invention a "polyether urethane" is a thermoplastic polyurethane in which a polyether is used as soft segments. These polyurethanes are ordinarily obtained by reacting an organic diisocyanate with a polyether of a molecular weight of 500-6000, and optionally lengthened in the presence of a catalyst. Toluylene diisocyanate and diphenylmethane diisocyanate, etc., are preferably employed as the isocyanate, and polytetramethylene glycol and poly(propylene oxide), etc., as the polyether.

Within the present invention these polyether/polyamide block copolymers, polyether/polyester block copolymers and polyether urethanes can be used singly, or in mixtures, or in mixtures of 2 or more block copolymers differing in the ratio of soft segments/hard segments in the resin; moreover, blends with other resins within a range within which the purpose of the present invention is achieved can also be employed.

The preferred carrier is a polyether/ester block copolymer blended with the thermoplastic polymer at a weight level of about 0.5 to about 15 %.

### Active Compound

The active compounds can be organic compounds such as a perfume, fabric softener, sunscreen agent, antibacterial agent, pesticide, insecticide and such other compounds that provide functionality on the article. In particular the invention is directed to insecticides.

The insecticide used in the insecticide solution/emulsion is preferably (for reasons of human safety) a member of the pyrethroid family of insecticides, which includes, but is not limited to, permethrin, deltamethrin, cyfluthrin, alpha-cypermethrin, etofenprox and lambda-cyhalothrin. These can be used alone or in combination. This group of insecticides is particularly effective against malaria-bearing mosquitoes and is relatively safe and non-toxic to humans. This latter characteristic makes these insecticides especially desirable for use in fabrics or garments which are to be worn close to or adjacent to the skin or body.

Permethrin is a third generation synthetic pyrethroid that has been approved for use by the Environmental Protection Agency (EPA) and the World Health Organization (WHO). It is the constituent of many household and agricultural insecticidal formulations and has also been used to impregnate army battle-dress uniforms in the field. Currently available formulations and methods of application have allowed only limited use of permethrin due to the fact that it washes out of treated fabrics within three to four washings. The formulation and method of application described herein overcome this severe disadvantage.

Deltamethrin is also a synthetic pyrethroid-based insecticide. It is a unique insecticide among synthetic pyrethroids in that it has a much longer duration of activity, and its insecticidal activity is much stronger than other commonly available insecticides. Because of this property, the doses needed for mosquito protection are extremely low, generally in the range of 3 to 18 g, making this insecticide highly economical. Deltamethrin is also advantageous because its activity persists over a wide range of temperatures. The low toxicity of this chemical makes it particularly desirable for use as part of a coated garment that is to be worn next to the skin or in close proximity to foodstuffs and the like.

Cypermethrin is yet another synthetic pyrethroid that, along with its emulsifiable concentrate formulations, is non-phytotoxic and has a very low order of dermal toxicity. It is considered to be among the least toxic of the synthetic pyrethroid insecticides. Alpha-cypermethrin is a racemic derivative of cypermethrin that is much more active for insecticidal activity than its parent compound.

As one skilled in the art would appreciate, the formulation of the current invention is not limited to the above-mentioned pyrethroids. Newer synthetic pyrethroids such as cyfluthrin and lambda-cyhalothrin also can be used. Other insecticides that may be used alone or in combination are carbamate compounds such as, alanycarb, bendiocarb, carbaryl, isopropcarb, carbosulfan, fenoxycarb, indoxacarb, propoxur, pirimicarb, thiocarb, methomyl, ethiofencarb, cartap, xylylcarb. Another group of insecticides such as organophosphorus compounds may be used in accordance with this invention. Such compounds include fenitrothion, diazinon, pyridaphenthion, pirimiphos-etyl and -methyl, etrimphos, fenthion, phoxim, chloropyrifos, cyanophos, pyraclofos, azamethiphos, malathion, temephos, dimethoate, formothion, phenthoate.

Additionally, as one skilled in the art would appreciate, any insecticide which is safe for humans and has the desired level of effectiveness against pests may be used.

The level of insecticide initially impregnated into the article made from the blend of the synthetic polymer composition and the carrier will vary depending on the specific insecticide used. The level remaining after a series of washings must still be effective as an insecticide. The range for the synthetic pyrethroids is from 40 to 500 mg active insecticide/m².

### Blending

The synthetic polymer composition and the carrier can be blended together using commercial blenders, or fed to an extruder through separate hoppers using a weigh-in or volumetric system to control the amount of carrier.

### Melt Spinning

The process of melt spinning the multifilament yarn is well known in the art. Through an extruder the molten polymer blend is fed under high pressure to the heated housing which accommodates the spinning pack. The filtered molten polymer is forced through a number of spinning orifices provided in a spinneret. The filaments emerge from the spinneret as a bundle. The filament bundle may pass through a delay zone (heated or unheated) prior to a quench zone, in which the bundle is cooled with air of room temperature, which is blown onto the filaments transverse to the direction of movement of the bundle. The filament bundle is subsequently brought into contact with the finish metering unit in which a suitable lubricant is applied to the filaments of the bundle in the usual way. Then the multifilament bundle arrives at the first of a set of advancing rolls for imparting the correct speed to the yarn bundle. The circumferential speed of the feed roll is determinative of the speed at which the filaments are spun and is therefore referred to as the spinning speed. After the spun multifilament yarn has left the rolls, it is wound into a package. The speed at which the yarn is wound will be approximately equal to the spinning speed. After the yarn has been taken up, it is drawn on a separate machine to the desired ratio. In principle, however, drawing also may be carried out on the spinning machine in a continuous spin-drawing process. In the event of the spin-drawing process known per se being applied a drawing device consisting of one or more driven rolls is to be provided between the first driven roll and the winding bobbin.

The decitex and filament count of the yarn will depend on the type of fabric and application for which it is intended. Typical values of decitex are in the range of about 40 to 300, and filament counts of from about 1 to 75. The strength of the yarn should be greater than about 35 cN/tex, with an elongation at break of greater than about 20 %. The tensile properties are measured according to ASTM D 2256-02.

### Fabric formation

The fabric to be impregnated with the active ingredient includes a variety of different fabric and fabric-type materials. In a preferred embodiment for mosquito nets, the fabric is a loosely-woven or warp knitted material. This type of fabric is particularly useful as a bed net, which is a net arranged in a loose tent-like configuration, most preferably over a sleeping person, to prevent insect bites during the night. A net mesh size in the range of about 1.5 to about 5 mm is preferred. The fabric can also be woven or sewn into a variety of different materials, including an article of clothing and a tent for outdoor covering such as a tarp or enclosure. The article of clothing can also include military battle dress clothing and material. The fabric can be also woven into a material that is disposable. Furthermore, the fabric can be adapted to form the outer covering of furniture or the like.

One particularly preferred embodiment of the insecticide-impregnated fabric that is particularly useful in an area where mosquito infestation is endemic and outer clothing made of bed net type material that can be worn over conventional clothing. This outer clothing would provide protection from mosquitoes during the day for persons engaged in activities such as walking, hiking, farming and the like.

It should also be appreciated that the fabric can be constructed into a hood or hat material to cover the head, neck and face area. This type of fabric is useful for protecting these highly vulnerable areas of the body.

### Impregnation Method

The active compound solution or emulsion is applied to the fabric using methods well known to those skilled in the art, such as, but not limited to, dipping the fabric into the solution one or more times, soaking the fabric in the solution for a specific amount of time, or spraying the solution onto the fabric. An effective method is to pad the active compound onto the fabric, followed by squeezing to control the amount of active compound on the fabric. The fabric is then washed and dried. Furthermore, the formulation of the active compound solution can be used with a variety of aerosol spraying techniques as well as non-aerosol spraying techniques. Such spraying devices may include, but are not limited to, hand held sprayer and sprayer bottles as well as industrial size applicators.

### Test Methods

### 1. Washing

The washing procedure used for testing was conducted according to the World Health Organization (WHO) guidelines: Six (6) grams of 1993 American Association of Textile Chemists and Colorists (AATCC) Standard Reference Detergent or L'Amande laundry soap is dissolved in 3 liters of deionized water. Na₃PO₄ is added to adjust the pH of this detergent solution to about 10. The fabric sample to be washed is weighed, and then the previously prepared AATCC detergent solution is added to the fabric sample in a beaker. The detergent solution amount is adjusted to be about 175 times the fabric weight. The beaker is placed in a shaker and shaken for 10 minutes at room temperature at approximately 160 shaking movements per minute.

The fabric sample is removed and, using a screen and pestle, the solution is squeezed from the fabric sample. Using an equivalent amount of deionized water as the detergent solution, the fabric sample is rinsed on the shaker for an additional 10 minutes and then the rinse cycle is repeated. Between the two rinses, no screen and pestle treatment is used. After the two rinses, the screen and pestle is used to squeeze water from the fabric sample and then paper towels are used to dry the fabric sample. The fabric sample is then placed in a 100°C vacuum oven for 10 minutes

### 2. Active Compound

The concentration of the active compound in the article was determined as follows. The active compound was extracted from a weighed section of the article in a suitable solvent, to which a known amount of an internal standard was added. The vial containing the article and solvent is shaken at room temperature for 18 hours. A sample of this solution was analyzed by gas chromatography to determine the active compound content. This is expressed as a weight % of the article, or mg of active compound/g of article.

In the case of insecticides the solvent is dichloromethane and the internal standard solution octacosane in toluene.

The present invention is further illustrated by the following non-limiting examples, which are not to be construed in any way as imposing limitations upon the scope thereof. On the contrary, it is to be clearly understood that resort may be had to various other embodiments, modifications, and equivalents thereof which, after reading the description herein, may suggest themselves to those skilled in the art without departing from the spirit of the present invention or the scope of the appended claims.

### EXAMPLES

### Example 1

A polymer blend of nylon 66 containing about 5 weight % of a polyether/ester block copolymer (HYTREL® 3078, DuPont Wilmington DE, USA) was melt spun and drawn to give a 111 dtex yarn with 17 filaments. This yarn was circular knitted into a hose leg. 13.7 grams of this fabric were treated in 549 milliliters 0.05% lambda-cyhalothrin emulsion at 100°C for 10 min. The emulsion was prepared by adding lambda-cyhalothrin insecticide to deionized water. This fabric sample was rinsed and dried in a 100°C vacuum oven for 10 min. The amount of lambda-cyhalothrin measured on the fabric by prior to washing was 0.39 weight percent. This sample was then washed 30 times according to the World Health Organization (WHO) washing method described above. The amount of lambda-cyhalothrin in the fabric was measured after 5, 10, 20 and 30 washes and the results are set forth in Table 1.

### Example 2

A fabric was made and tested following the procedure of Example 1. This fabric contained yarns of 111 dtex and 17 filaments and prepared from a blend of nylon 66 and 15 weight percent of a polyether/ester block copolymer (HYTREL® 3078) polymer. 15.2 grams of this fabric were treated in 608 milliliters 0.03% lambda-cyhalothrin emulsion at 100°C for 20 min. The emulsion was prepared by adding 13.1 % lambda solution to deionized water. The fabric sample was rinsed and dried in a 100°C vacuum oven for 10 min. The amount of lambda-cyhalothrin measured on the fabric prior to washing was 0.61 weight percent. The amount of lambda-cyhalothrin in the fabric was measured after 5, 10, 20 and 30 washes and the results are set forth in Table 1.

### Example 3

A fabric was made and tested following the procedure of Example 1. This fabric contained yarns of 111dtex and 17 filaments and prepared from a blend of nylon 66 and 5 weight percent of a polyether/ester block copolymer (HYTREL® 3078) polymer. The weight of the fabric was 11.64 grams, and was treated in 465.6 grams of a 0.03 % lambda-cyhalothrin emulsion in deionized water at 100°C for 10 min. This sample was rinsed and dried in 100°C vacuum oven for 10 minutes. This sample was washed 5 times using the previously described WHO wash method. The amount of lambda-cyhalothrin on the fabric before washing was 0.22 weight percent. The amount of lambda-cyhalothrin after 5 washes is set forth in Table 1.

**Table1. Lambda Retention in Nylon 6,6 Fabric Containing Polyether-ester Copolymer**

| Example | Polyether-ester,wt. % | Lambda retention in fabric after washes, wt. % | | | | |
|---|---|---|---|---|---|---|
| | | 0 wash | 5 washes | 10 washes | 20 washes | 30 washes |
| 1 | 5 | 0.39 | 0.19 | 0.15 | 0.10 | 0.08 |
| 2 | 15 | 0.61 | 0.46 | 0.47 | 0.45 | 0.45 |
| 3 | 5 | 0.22 | 0.14 | 0.11 | 0.09 | 0.07 |
| Comp. 1 | 0 | 0.15 | 0.005 | 0.002 | n.m. | n.m. |

| | | | | | | |
|---|---|---|---|---|---|---|
| n.m. - not measured | | | | | | |

### Example 4

A polymer blend of polyethylene terephthalate (PET) containing about 5 weight % of a polyether/ester block copolymer (HYTREL® 3078, DuPont Wilmington DE, USA) was melt spun and drawn to give a 111 dtex yarn with 17 filaments. This yarn was circular knitted into a hose leg. The fabric was treated in lambda-cyhalothrin emulsions at different concentrations at reflux for 20 min. The emulsion was prepared by adding lambda-cyhalothrin insecticide to deionized water. The fabric samples were rinsed and dried in a 100°C vacuum oven to dryness, then washed 30 times according to the World Health Organization (WHO) washing method described above. The amount of lambda-cyhalothrin in the fabric was measured after 5, 10, 20 and 30 washes and the results are set forth in Table 2.

**Table 2. Lambda Retention in PET Containing Polyether-ester Copolymer**

| Sample | Lambda emulsion, wt% | Lambda retention in fabric after washes, wt. % | | | | |
|---|---|---|---|---|---|---|
| | | 0 wash | 5 washes | 10 washes | 20 washes | 30 washes |
| 82 Series | 0.025 | 0.844 | 0.422 | 0.290 | 0.107 | 0.112 |
| 81 Series | 0.050 | 1.397 | 0.832 | 0.484 | 0.257 | 0.120 |
| 80 Series | 0.100 | 2.222 | 1.292 | 0.601 | 0.197 | 0.161 |

| | | | | | | |
|---|---|---|---|---|---|---|
| PET contains 5% Polyether-ester | | | | | | |

### Comparative Example 1

A fabric was made and tested following the procedure of Example 1. In this Example no polyether/ester block copolymer was added. This nylon 66 fabric contained yarns of 111 dtex and 17 filaments. 8.8 grams of this nylon fabric was treated in 352 grams 0.03% lambda-cyhalothrin emulsion at 100°C for 10 minutes. This fabric was rinsed and dried in 100°C vacuum oven for 10 minutes. Prior to washing this sample contained 0.15 weight percent of lambda-cyhalothrin. The amount of lambda-cyhalothrin after 5 washes is set forth in Table 1.

The inventive Examples retain at least 0.04 wt. % lambda-cyhalothrin after 30 washes. This is higher than the minimum effective amount of 0.04 %., corresponding to 20 mg/m2 of the fabric, which is the WHO recommended level for lambda-cyhalothrin.

### Example 5

The procedure of Example 1 was repeated with polyether/ester block copolymers containing different mole % of ester and ether. The ester moiety being based on polybutylene terephthalate and the ether moiety based on tetramethylene ether glycol (PTMEG) the amount of lambda-cyhalothrin remaining after each wash cycle was measured and the results set forth in Table 3.

**Table 3.**

| Carrier | Ether segment, | Lambda-cyhalotrin, wt. % Number of washes | | | | | |
|---|---|---|---|---|---|---|---|
| | Mole % | 0 | 1 | 2 | 3 | 4 | 5 |
| Hytrel® 7246 | 20 | 1.05 | 0.15 | 0.12 | 0.10 | 0.10 | 0.08 |
| Hytrel® 5556 | 40 | 1.05 | 0.28 | 0.22 | 0.20 | 0.19 | 0.17 |
| Hytrel® 3078 | 60 | 0.98 | 0.37 | 0.32 | 0.31 | 0.30 | 0.27 |

It is evident from this example that a polymer containing a polyether chain as a constituent unit is an effective carrier.

### Example 6

Polyether/ester block copolymer has been prepared based on PET using 3 wt. % of polyether diols. These include polyethylene glycols of molecular weight 450 and 1500, as well as PTMEG diols of molecular weight 650, 2000 and mixtures of PEG and PTMEG.

### Example 7

Fibers (111 dtex, 17 filaments) were prepared from a polymer blend of nylon 66 with 8 wt. % polyether/ester block copolymer (Hytrel® 3078) and from a polymer blend of PET with 5 wt. % polyether/ester block copolymer (Hytrel® 3078). Fabrics were knitted, and 11.6 grams of each fabric was treated in 465 grams 0.2% lambda-cyhalothrin emulsion at 100°C for 20 minutes. The fabrics were rinsed and dried in 100°C vacuum oven for 10 minutes. The amount of lambda-cyhalothrin after washing is set forth in Table 4.

**Table 4.**

| **Thermoplastic polymer** | **Lambda-cyhalotrin, wt. % Number of washes** | | | | |
|---|---|---|---|---|---|
| | 0 | 5 | 10 | 20 | 30 |
| Nylon | 1.87 | 0.74 | 0.69 | 0.65 | 0.62 |
| Polyester | 1.56 | 1.43 | 1.18 | 0.91 | 0.55 |

This Example shows that PET is a better thermoplastic polymer than nylon 66 for wash fastness of the insecticide.

### Example 8

A bioassay for efficacy of the lambda cyhalotrin treatment was done using fabrics prepared from a polymer blend of polyethylene terephthalate (PET) containing about 5 weight % of a polyether/ester block copolymer (HYTREL® 3078, DuPont Wilmington DE, USA); melt spun and drawn to give a 111 dtex yarn with 17 filaments. This yarn was used to prepare fabric samples. Each fabric was treated in lambda-cyhalothrin emulsions at different concentrations at reflux for 20 min. This emulsion was prepared by as described above. The fabric samples (10 cm by 10 cm) were rinsed and dried in a 100°C vacuum oven to dryness, then washed multiple times according to the World Health Organization (WHO) washing method described above. The bioassay for efficacy consisted of exposing 5 day old non-blood fed mosquitoes (Culex quinquefasciatus; a reference strain known as: "S-LAB") to the fabric samples for 3 minutes. Five S-LAB mosquitoes on each sample fabric with 5 replicates of exposure were performed, i.e. 25 mosquitoes per sample. Mosquitoes exposed to untreated sample fabrics comprised the controls. Bioassay was done at 25+/-°C and 75+/-10% relative humidity.

The results of the bioassay are set forth in Table 5. The per cent mortality of S-LAB reference strain mosquitoes is at least 80% even after 30 washes to samples treated with at least 0.025 % lambda cyhalothrin emulsion.

**Table 5.**

| **Sample ID** | **No. Washes** | **% Lambda cyhalothrin in treatment emulsion** | **Fiber composition** | **% "S-LAB" Mortality (bioassay)** |
|---|---|---|---|---|
| 105715-80-30 | 30 | 0.2 | 5% HYTREL® 3078 in PET | 100% |
| 105715-80-20 | 20 | 0.1 | " | 85% |
| 105715-81-0 | 0 | 0.05 | " | 100% |
| 105715-81-5 | 5 | 0.05 | " | 96% |
| 105715-81-10 | 10 | 0.05 | " | 100% |
| 105715-81-20 | 20 | 0.05 | " | 100% |
| 105715-82-20 | 20 | 0.025 | " | 100% |
| 105715-82-30 | 30 | 0.025 | " | 80% |
| 105715-83-20 | 20 | 0.025 | PET control | 0% |
| 105715-83-30 | 30 | 0.025 | PET control | 8% |
| S113 | 0 | 0.0 | PET blank | 0% |

### Example 9

An N, N-Diethyl toluamide (often referred to as "DEET" insect repellent) treatment of nylon (TACTEL®) fabric containing 24.7% polyurethane fiber (LYCRA®) was performed to examine the wash retention of DEET on fabric. A fabric sample comprising 3.8 grams of nylon/polyurethane fiber was treated in 152 grams of 0.5% DEET emulsion at 100°C for 20 min. This sample was rinsed and air-dried. This sample was washed 10 times using AATCC 135 standard wash procedure. After washing, this sample was judged to have an odor equally strong as the initial control sample. An instrumental method of analysis using gas chromatography (GC) on the prepared samples showed good retention of the repellent on fabric and is summarized in Table 6.

**Table 6.**

| **DEET Retention on Fabric by Gas Chromatography** | |
|---|---|
| **Wash Cycles (AATCC 135 Std.)** | **% DEET by weight on fabric** |
| **0** | **3.78** |
| **5** | **3.05** |
| **10** | **2.46** |

### Example 10

### Part 1.

A fragrance treatment to nylon fabric containing 24.7% polyurethane fiber was performed with the fragrance *Dynascone 10* (available from MOELLHAUSEN S.p.A.; Via Torri Bianche, 9; 20059 Vimercate (MI), Italy;CAS:56973-85-4). In this procedure a 3 gram fabric sample, identical to that of Example 9, was added to 0.5% *Dynascone 10* mixture in deionized water. A small amount of surfactant, 2% Emcol® 4500 (Chemtura Corporation, Middlebury CT, USA), was used to help dissolve the *Dynascone 10*. The mixture was heated to between 90 -100°C for 20 minutes. The fabric sample was removed and rinsed with deionized water and air-dried. The fabric sample still contained 40% *Dynascone 10* after washed ten times using AATCC 135 wash procedure. The strong odor of *Dynascone 10* was apparent to a human subject. The *Dynascone 10* retention on fabric was measured by using GC analysis. These results are summarized in Table 7.

**Table 7.**

| ***Dynascone 10* Retention on Fabric by Gas Chromatography** | |
|---|---|
| **Wash Cycles (AATCC 135 Std.)** | ***% Dynascone 10* by weight on fabric** |
| **0** | **5.20** |
| **5** | **4.15** |
| **10** | **3.43** |

### Part 2.

A fragrance treatment to second nylon fabric was performed. The nylon (TACTEL®) fabric sample containing 12% HYTREL® 3078 was weighed and added to Dynascone 10 into deionized water, prepared as previously. The mixture was stirred vigorously and to it an anionic surfactant was slowly added (DOWFAX® 2A1; DOW Chemical Co., North America) to emulsify the *Dynascone 10*. The fabric sample was added to this emulsion, heated to the boil and maintained at boiling for 20 minutes. The fabric sample was removed and strained using a pestle to squeeze excess liquid from it. The fabric sample was put into 40 times its weight of deionized and stirred for 2 minutes at room temperature. The fabric sample was removed and strained again using a pestle to squeeze excess liquid from it. This fabric sample was washed using AATCC 135 method and the *Dynascone 10* retention on fabric was measured by GC method as before. The results of the GC analysis are reported in Table 8.

**Table 8.**

| ***Dynascone 10* Retention on Fabric by Gas Chromatography** | |
|---|---|
| **Wash Cycles (AATCC 135 Std.)** | ***% Dynascone 10* by weight on fabric** |
| **0** | **2.15** |
| **5** | **1.09** |
| **10** | **0.324** |

### Part 3.

A fragrance treatment to a polyester (polyethylene terephthalate or PET) fabric was performed. The PET fabric sample containing 12% HYTREL® 3078 was weighed and added to *Dynascone 10* into deionized water, prepared as previously. The mixture was stirred vigorously and to it an anionic surfactant was slowly added (DOWFAX® 2A1; DOW Chemical Co., North America) to emulsify the *Dynascone 10*. The PET fabric sample was added to this emulsion, heated to the boil and maintained at boiling for 20 minutes. The fabric sample was removed and strained using a pestle to squeeze excess liquid from it. The fabric sample was put into 40 times its weight of deionized and stirred for 2 minutes at room temperature. The fabric sample was removed and strained again using a pestle to squeeze excess liquid from it. This fabric sample was washed using AATCC 135 method and the *Dynascone 10* retention on fabric was measured by GC method as before. The results of the GC analysis are reported in Table 9.

**Table 9.**

| ***Dynascone 10* Retention on Fabric by Gas Chromatography** | |
|---|---|
| **Wash Cycles (AATCC 135 Std.)** | ***% Dynascone 10* by weight on fabric** |
| **0** | **2.96** |
| **5** | **1.68** |
| **10** | **0.89** |

Thus, it is apparent that there was provided in accordance with the teachings herein, a wash resistant composition, and articles there from, containing active compounds fully satisfying the objects, aims and advantages set forth above. While the invention has been described in conjunction with specific embodiments thereof, it is evident that many alternatives, modifications, and variations will be apparent to those skilled in the art in light of the foregoing description. Accordingly, it is intended to embrace all such alternatives, modifications, and variations as fall within the spirit and broad scope of the appended claims.

The invention also encompasses the following embodiments.
1.A synthetic polymer composition comprising a blend of a thermoplastic polymer and a polymer containing a polyether chain as a constituent, wherein articles prepared from said composition comprise an active compound and wherein said article is wash resistant.
2.The synthetic polymer composition of embodiment 1, wherein said thermoplastic compound is a polyester, polycarbonate, poly(alpha)olefin or polyamide.
3.The synthetic polymer composition of embodiment 2, wherein said thermoplastic compound is polyester.
4.The synthetic polymer composition of embodiment 1, wherein said polymer containing a polyether chain as a constituent is a polyoxyalkylene, or a polyether block copolymer with an amide, ester or urethane
5.The synthetic polymer composition of embodiment 4, wherein said polymer containing a polyether chain as a constituent is a polyether/ester block copolymer.
6.The synthetic polymer composition of embodiment 1, wherein said active compound is a perfume, fabric softener, sunscreen agent, antibacterial agent, pesticide, insecticide or such other compounds that provide functionality.
7.The synthetic polymer composition of embodiment 6, wherein said insecticide is selected from the group consisting of synthetic pyrethroids, carbamate compounds, organophosphorus compounds and their mixtures.
8.The synthetic polymer composition of embodiment 1, wherein said polymer containing a polyether chain as a constituent is in an amount of 0.5 to 15 weight percent of the total composition.
9.The synthetic polymer composition of embodiment 1, wherein said active compound is in an amount of 0.05 to 1 weight percent of the total composition.
10.A multifilament yarn prepared by melt spinning a synthetic polymer composition comprising a blend of a thermoplastic polymer and a polymer containing a polyether chain as a constituent.
11.The multifilament yarn of embodiment 10, wherein said thermoplastic compound is a polyester, polycarbonate, poly(alpha)olefin or polyamide.
12.The multifilament yarn of embodiment 11, wherein said thermoplastic compound is polyester.
13.The multifilament yarn of embodiment 10, wherein said polymer containing a polyether chain as a constituent is a polyoxyalkylene, or a polyether block copolymer with an amide, ester or urethane
14.The multifilament yarn of embodiment 13, wherein said polymer containing a polyether chain as a constituent is a polyether/ester block copolymer.
15.A woven or knitted article prepared from the multifilament yarn of embodiment 10 to 14.
16.The article of embodiment 15 which has been impregnated with an active compound.
17.The article of embodiment 16, wherein said active compound is a perfume, fabric softener, sunscreen agent, antibacterial agent, pesticide, insecticide or such other compounds that provide functionality.
18.The article of embodiment 17, wherein said insecticide is selected from the group consisting of synthetic pyrethroids, carbamate compounds, organophosphorus compounds and their mixtures.
19.An article of embodiment 18, wherein said article comprises: netting, nets, outerwear, bedding, protective clothing, underwear, clothing and tents.
20.The article of embodiment 19, wherein said insecticide comprises more than 0.1 weight % after five wash cycles.
21.A method for making an article suitable as a carrier for active compounds, comprising:
   blending a thermoplastic polymer with a polymer containing a polyether chain as a constituent;
   forming a plurality of fibers from the blended thermoplastic polymer with a polymer containing a polyether chain as a constituent;
   forming an article from the plurality of fibers; and treating the article with a solution of the active compound,
   wherein the treated article comprises more than 0.1 wt. % of active
   compound after five cycles of washing.
22.The method of embodiment 21, wherein the wherein said thermoplastic compound comprises a polyester, a polycarbonate, a poly(alpha)olefin or a polyamide.
23.The method of embodiment 21, wherein said polymer containing a polyether chain as a constituent comprises a polyoxyalkylene, or a polyether block copolymer with an amide, ester or urethane
24.The method of embodiment 23, wherein said polymer containing a polyether chain as a constituent is a polyether/ester block copolymer.
25.The method of embodiment 21, wherein said active compound comprises a perfume, fabric softener, sunscreen agent, antibacterial agent, pesticide, insecticide or such other compounds providing functionality.
26.The method of embodiment 25, wherein said insecticide is selected from the group consisting of synthetic pyrethroids, carbamate compounds, organophosphorus compounds and their mixture.
27.The method of embodiment 21, wherein said polymer containing a polyether chain as a constituent comprises 0.5 to 15 weight percent of the total composition.
28.The method of embodiment 21, wherein said active compound comprises an amount of 0.05 to 3 weight percent of the total composition.

## Claims

1. A synthetic polymer composition comprising a blend of a thermoplastic polymer selected from a polycarbonate, a poly(alpha)olefin or a polyamide and a polymer containing a polyether chain as a constituent, wherein articles prepared from said composition comprise an active compound and wherein said article is wash resistant.

2. The synthetic polymer composition of claim 1, wherein said polymer containing a polyether chain as a constituent is in an amount of 0.5 to 15 weight percent of the total composition.

3. The synthetic polymer composition of claim 1, wherein said active compound is in an amount of 0.05 to 1 weight percent of the total composition.

4. A multifilament yarn prepared by melt spinning a synthetic polymer composition comprising a blend of a thermoplastic polymer selected from a polycarbonate, a poly(alpha)olefin or a polyamide and a polymer containing a polyether chain as a constituent.

5. The synthetic polymer composition of claim 1 or the multifilament yarn of claim 4, wherein said polymer containing a polyether chain as a constituent is a polyoxyalkylene, or a polyether block copolymer with an amide, ester or urethane

6. The synthetic polymer composition of claim 1 or the multifilament yarn of claim 5, wherein said polymer containing a
polyether chain as a constituent is a polyether/ester block copolymer.

7. A woven or knitted article prepared from the multifilament yarn of claims 4 to 6.

8. The article of claim 7 which has been impregnated with an active compound.

9. The synthetic polymer composition of claim 1 or the article of claim 8, wherein said active compound is a perfume, fabric softener, sunscreen agent, antibacterial agent, pesticide, insecticide or such other compounds that provide functionality.

10. The synthetic polymer composition or the article of claim 9, wherein said insecticide is selected from the group consisting of synthetic pyrethroids, carbamate compounds, organophosphorus compounds and their mixtures.

11. An article of claim 10, wherein said article comprises: netting, nets, outerwear, bedding, protective clothing, underwear, clothing and tents.

12. The article of claim 11, wherein said insecticide comprises more than 0.1 weight % after five wash cycles.
